# EUROPÄISCHE PATENTSCHRIFT

(11) **EP 3 868 606 B1**
(45) Veröffentlichungstag und Bekanntmachung des Hinweises auf die Patenterteilung: **24.04.2024**
(21) Anmeldenummer: 21168964.1
(22) Anmeldetag: 15.05.2013
(51) Int. Cl.: B60Q 1/28, B60Q 1/00

(54) **FAHRZEUGSCHEINWERFER**
VEHICLE HEADLAMP
PHARE DE VÉHICULE

(30) Priorität: 22.05.2012 DE 102012208516
(43) Veröffentlichungstag der Anmeldung: 25.08.2021
(62) Teilanmeldung aus: 13725110.4
(73) Patentinhaber: Bayerische Motoren Werke Aktiengesellschaft, 80809 München (DE)
(72) Erfinder: Henseler, Ulrich, 85356 Freising (DE); Erdl, Helmut, 83126 Flintsbach (DE); Kaltenbach, Andreas, 85716 Unterschleißheim (DE)

(56) Entgegenhaltungen:
- EP-A2- 1 491 399
- WO-A1-2011/029493
- DE-A1- 19 627 936
- DE-A1-102010 013 821
- DE-U1-202007 010 640
- JP-A- 2010 212 109
- US-A1- 2012 069 592

## Beschreibung

Die Erfindung betrifft einen Fahrzeugscheinwerfer.

Die Druckschriften US 2012/069592 A1 und EP 1 491 399 B1 offenbaren bekannte Scheinwerfer.

Wie beispielsweise aus der DE102010008595A1 bekannt, sind Fahrzeugscheinwerfer in der Lage, in einem Abblendlichtmodus (Abblendlichtbetriebsart) eine Abblendlichtverteilung und unabhängig davon in einem Tagfahrlichtmodus (Tagfahrlichtbetriebsart) eine Tagfahrlichtverteilung zu realisieren.

Es ist ein Ziel der aktuellen Leuchtenentwicklung, Kraftfahrzeugleuchten, insbesondere Fahrzeugscheinwerfer, mit einem hohen Wiedererkennungswert zu schaffen.

In der Vergangenheit wurde dies insbesondere durch besonders ausgeprägte Realisierungen der Tagfahrlicht-Leuchtfläche versucht. So sind besonders markante Tagfahrlicht-Leuchtflächen in Form von Ringen, Doppelringen oder Schwingen bekannt. Der durch solche markanten Tagfahrlicht-Leuchtflächen erzielbare Wiedererkennungswert für den Scheinwerfer, das Fahrzeug oder sogar die Fahrzeugmarke wird allerdings dadurch wieder abgeschwächt, dass der gleiche Scheinwerfer in der Dunkelheit ein vollkommen anderes, auf einer Abblendlicht-Leuchtfläche basierendes, Erscheinungsbild vermittelt.

Der Erfindung liegt nun die Aufgabe zu Grunde, einen Fahrzeugscheinwerfer anzugeben, durch den ein im Wesentlichen identisches Erscheinungsbild in der Nacht, insbesondere im Abblendlichtmodus, und am Tag, insbesondere im Tagfahrlichtmodus, vermittelt wird.

Diese Aufgabe wird durch die Merkmale des unabhängigen Anspruchs gelöst. Vorteilhafte Weiterbildungen der Erfindung sind den abhängigen Ansprüchen zu entnehmen.

Die Erfindung basiert demnach auf dem Gedanken, das Erscheinungsbild eines Fahrzeugscheinwerfers im Abblendlichtmodus und im Tagfahrlichtmodus durch ein Erscheinungslichtmodul zu erzeugen.

Um dies zu ermöglichen, wird der Fahrzeugscheinwerfer derart ausgeführt, dass auch in einem Abblendlichtmodus das durch das Erscheinungslichtmodul für einen Betrachter regelmäßig wahrnehmbare Erscheinungsbild durch das Abblendlichtmodul nicht überstrahlt wird.

Dies wird vereinfacht ausgedrückt dadurch erreicht, dass, insbesondere hinsichtlich der horizontalen Ausrichtung in Fahrtrichtung, die von dem Abblendlichtmodul in eine Richtung oberhalb der Hell-Dunkel-Grenze emittierte und somit für einen Betrachter in der Regel wahrnehmbare Lichtstärke verglichen mit der von dem Erscheinungslichtmodul in eine Richtung oberhalb der Hell-Dunkel-Grenze emittierten Lichtstärke gering ist.

Dadurch wird im Abblendlichtmodus unterhalb der Hell-Dunkel-Grenze im Wesentlichen durch das Abblendlichtmodul eine erforderliche und von Regulierungsbehörden vorgegebene Lichtstärke realisiert und gleichzeitig das oberhalb der Hell-Dunkel-Grenze wahrnehmbare Erscheinungsbild des Fahrzeugscheinwerfers durch das Erscheinungslichtmodul geprägt.

Ein erfindungsgemäßer Fahrzeugscheinwerfer weist ein Abblendlichtmodul und ein Erscheinungslichtmodul auf, die derart ausgeführt, angeordnet und ausgerichtet sind, dass in einem Abblendlichtmodus, insbesondere zur Realisierung einer Abblendlichtverteilung, weniger als 30%, insbesondere weniger als 20% oder weniger als 10% oder weniger als 5% oder weniger als 3%, der durch den Fahrzeugscheinwerfer hinsichtlich der vertikalen Ausrichtung, insbesondere in eine oder mehrere Richtungen, oberhalb der Hell-Dunkel-Grenze und hinsichtlich der horizontalen Ausrichtung in Fahrtrichtung, insbesondere in Fahrzeuglängsrichtung nach vorne, emittierten Lichtstärke durch das Abblendlichtmodul erzeugt werden.

Der jeweils restliche Anteil der durch den Fahrzeugscheinwerfer hinsichtlich der vertikalen Ausrichtung, insbesondere in eine oder mehrere Richtungen, oberhalb der Hell-Dunkel-Grenze und hinsichtlich der horizontalen Ausrichtung in Fahrtrichtung, insbesondere in Fahrzeuglängsrichtung nach vorne, emittierten Lichtstärke wird dabei vorzugsweise im Wesentlichen oder komplett durch das Erscheinungslichtmodul erzeugt. Besonders bevorzugt werden im Abblendlichtmodus, insbesondere zur Realisierung der Abblendlichtverteilung, mehr als 70%, insbesondere mehr als 80% oder mehr als 90% oder mehr als 95% oder mehr als 97%, der durch den Fahrzeugscheinwerfer hinsichtlich der vertikalen Ausrichtung, insbesondere in eine oder mehrere Richtungen, oberhalb der Hell-Dunkel-Grenze und hinsichtlich der horizontalen Ausrichtung in Fahrtrichtung emittierten Lichtstärke durch das Erscheinungslichtmodul erzeugt.

Bei aufwändigen Simulationen stellten sich die genannten Anteilsgrenzen als besonders vorteilhaft heraus. Bei Einhaltung dieser Grenzen wird auch im Abblendlichtmodus das für einen Betrachter regelmäßig wahrnehmbare Erscheinungsbild durch das Erscheinungslichtmodul geprägt.

Gemäß einer besonders vorteilhaften Ausführungsvariante handelt es sich bei der Hell-Dunkel-Grenze um eine adaptive Hell-Dunkel-Grenze, die beispielsweise aufgrund der Umfeldsituation automatisch angepasst wird.

Gemäß einer weiteren vorteilhaften Ausgestaltung werden im Abblendlichtmodus, insbesondere zur Realisierung einer Abblendlichtverteilung, weniger als 10%, insbesondere weniger als 5% oder weniger als 3%, der durch den Fahrzeugscheinwerfer hinsichtlich der vertikalen Ausrichtung, insbesondere in eine oder mehrere Richtungen, unterhalb der Hell-Dunkel-Grenze und hinsichtlich der horizontalen Ausrichtung in Fahrtrichtung emittierten Lichtstärke durch das Erscheinungslichtmodul erzeugt.

Ferner sieht eine Ausgestaltung der Erfindung vor, dass im Abblendlichtmodus mehr als 90%, insbesondere mehr als 95% oder mehr als 98%, der durch den Fahrzeugscheinwerfer hinsichtlich der vertikalen Ausrichtung, insbesondere in eine oder mehrere Richtungen, unterhalb der Hell-Dunkel-Grenze und hinsichtlich der horizontalen Ausrichtung in Fahrtrichtung emittierten Lichtstärke durch das Abblendlichtmodul erzeugt werden.

In einem Tagfahrlichtmodus, insbesondere zur Erzeugung einer Tagfahrlichtverteilung, mehr als 90%, insbesondere mehr als 99%, der durch den Fahrzeugscheinwerfer hinsichtlich der horizontalen Ausrichtung in Fahrtrichtung emittierten Lichtstärke durch das Erscheinungslichtmodul erzeugt werden.

Dabei leistet vorzugsweise in dem Tagfahrlichtmodus, insbesondere zur Erzeugung einer Tagfahrlichtverteilung, das Abblendlichtmodul einen untergeordneten Beitrag (beispielsweise kleiner 5%) oder keinen Beitrag. Insbesondere ist vorgesehen, dass das Abblendlichtmodul im Tagfahrlichtmodus abgeschaltet ist.

Erfindungsgemäß ist das Erscheinungslichtmodul im Abblendlichtlichtmodus gegenüber dem Tagfahrlichtmodus gedimmt.

Gemäß einer weiteren vorteilhaften Ausgestaltung der Erfindung umfasst das Erscheinungslichtmodul ein Lichtleitermodul, durch das im Abblendlichtmodus und im Tagfahrlichtmodus eine markenprägende Erscheinung des Fahrzeugscheinwerfers realisiert wird.

Das Abblendlichtmodul und das Erscheinungslichtmodul werden vorzugsweise durch verschiedene Lichtquellen realisiert.

Besonders bevorzugt ist vorgesehen, dass im Abblendlichtmodus weniger als 20%, insbesondere weniger als 15%, weniger als 10% oder weniger als 5% oder weniger als 3%, des durch das Abblendlichtmodul erzeugten Lichtstromes oberhalb der Hell-Dunkel-Grenze abgestrahlt werden.

Eine andere Weiterbildung sieht vor, dass im Abblendlichtmodus mehr als 40%, insbesondere mehr als 55% mehr als 75% mehr als 90% oder mehr als 95%, des durch das Erscheinungslichtmodul erzeugten Lichtstromes oberhalb der Hell-Dunkel-Grenze abgestrahlt werden.

Entsprechend kann vorgesehen sein, dass im Abblendlichtmodus weniger als 60%, insbesondere weniger als 45% weniger als 25% weniger als 10% oder weniger als 5%, des durch das Erscheinungslichtmodul erzeugten Lichtstromes unterhalb der Hell-Dunkel-Grenze abgestrahlt werden.

Vorzugsweise ist das Abblendlichtmodul als Projektionssystem ausgeführt, wobei eine Abbildungslinse des Projektionssystems eine Antireflexbeschichtung aufweist. Dadurch wird der Streulichtanteil des Abblendlichtmoduls reduziert. Dadurch können die weiter oben genannten, besonders geringen, durch das Abblendlichtmodul oberhalb der Hell-Dunkel-Grenze emittierten Lichtstärken realisiert werden.

Vorzugsweise sind mindestens eine oder alle Linsen des Projektionssystems streulichtarm ausgeführt; dies umfasst vorzugsweise eine möglichst scharfe Ausführung von Begrenzungskanten der Linse oder der Linsen, eine Schwärzung und/oder Beschichtung von funktional nicht notwendigen Linsenrandflächen, geringe Oberflächenrauhigkeiten der Linse oder der Linsen, keine Oberflächenstrukturen und/oder eine Beschichtung zumindest einer Linsenoberfläche, um zusätzliche Reflektionen zu vermeiden.

Als Antireflexbeschichtung sind vorzugsweise dielektrische Schichtstapel von vorzugsweise 4-8 Schichten vorgesehen und/oder Mikrostrukturen, sogenannte Mottenaugenstrukturen, mit einer bevorzugten Ausdehnung im Bereich 0.01 - 50 Mikrometer, die vorzugsweise bereits im Herstellungsprozess der Linsenabformung enthalten sind.

Vorzugsweise ist das Abblendlichtmodul als Projektionssystem ausgeführt, wobei die Blende des Projektionssystems lichtabsorbierend ausgeführt ist. Auch dadurch können die weiter oben genannten, besonders geringen, durch das Abblendlichtmodul oberhalb der Hell-Dunkel-Grenze emittierten Lichtstärken realisiert werden.

Vorzugsweise ist das Abblendlichtmodul als Projektionssystem ausgeführt, wobei die Lichtführung im hinteren Linsenbereich streulichtarm ausgeführt ist. Auch dadurch können die weiter oben genannten, besonders geringen, durch das Abblendlichtmodul oberhalb der Hell-Dunkel-Grenze emittierten Lichtstärken realisiert werden.

Vorzugsweise ist das Abblendlichtmodul als Reflektorsystem ausgeführt, wobei die Oberfläche des Reflektors durch seine Oberflächenqualität und Kantenbeschaffenheit der Ränder streulichtarm ausgeführt ist. Auch dadurch können die weiter oben genannten, besonders geringen, durch das Abblendlichtmodul oberhalb der Hell-Dunkel-Grenze emittierten Lichtstärken realisiert werden.

Vorzugsweise entspricht im Abblendlichtmodus der durch das Abblendlichtmodul erzeugte Lichtstrom mindestens dem zweifachen, insbesondere mindestens dem dreifachem oder mindestens dem vierfachen, des durch das Erscheinungslichtmodul erzeugten Lichtstromes.

Im Folgenden wird die Erfindung anhand von Beispielen unter Bezugnahme auf die folgenden Figuren näher erläutert:
- Figur 1: zeigt eine vereinfachte schematische Prinzipdarstellung eines Fahrzeugscheinwerfers in Vorderansicht;
- Figur 2: zeigt eine vereinfachte schematische Prinzipdarstellung eines Fahrzeuges in Draufsicht;
- Figur 3: zeigt eine vereinfachte schematische Prinzipdarstellung eines Fahrzeuges in Seitenansicht.

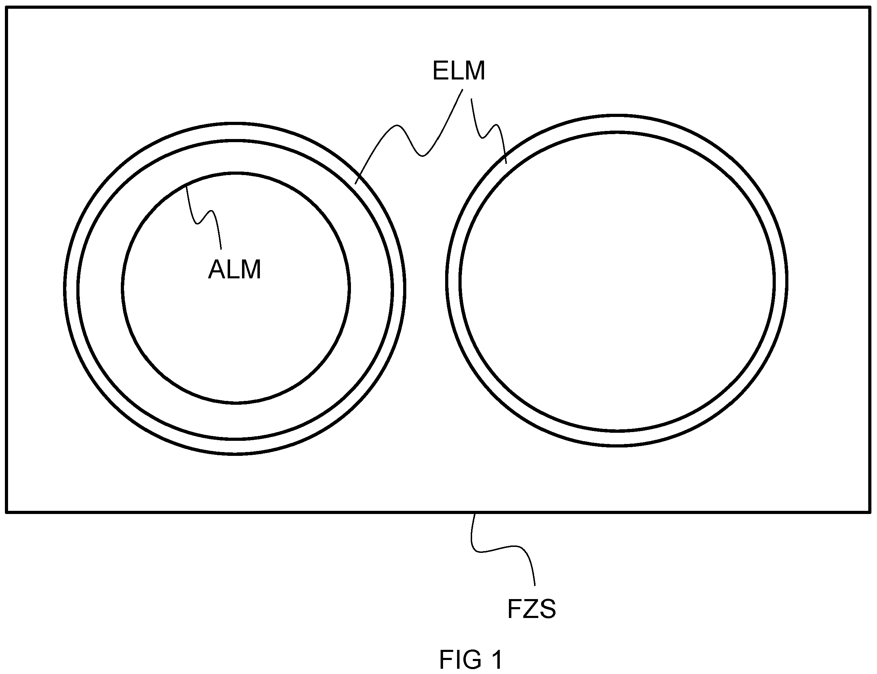

Der in Figur 1 gezeigte Fahrzeugscheinwerfer FZS weist ein, beispielsweise als Projektionssystem oder Reflexionssystem realisiertes, Abblendlichtmodul ALM auf, durch das im Wesentlichen eine Abblendlichtverteilung erzeugt wird.

Außerdem ist ein Erscheinungslichtmodul ELM vorgesehen, mit dem, beispielsweise anhand von mit LED-Licht gespeisten Lichtleitern (hier zwei Leuchtringe), eine Tagfahrlichtverteilung erzeugt wird. Außerdem leistet das Erscheinungslichtmodul ELM, insbesondere oberhalb der Hell-Dunkel-Grenze, einen Beitrag zur Abblendlichtverteilung, so dass sowohl im Tagfahrlichtmodus als auch im Abblendlichtmodus das Erscheinungsbild des Fahrzeugscheinwerfers FZS für einen vor dem Fahrzeugscheinwerfer stehenden Betrachter durch das Erscheinungslichtmodul geprägt wird. Das Abblendlichtmodul ALM und das Erscheinungslichtmodul ELM werden dabei jeweils durch mindestens eine - nicht dargestellte - Lichtquelle gespeist, wobei die Lichtquellen unterschiedlich sind.

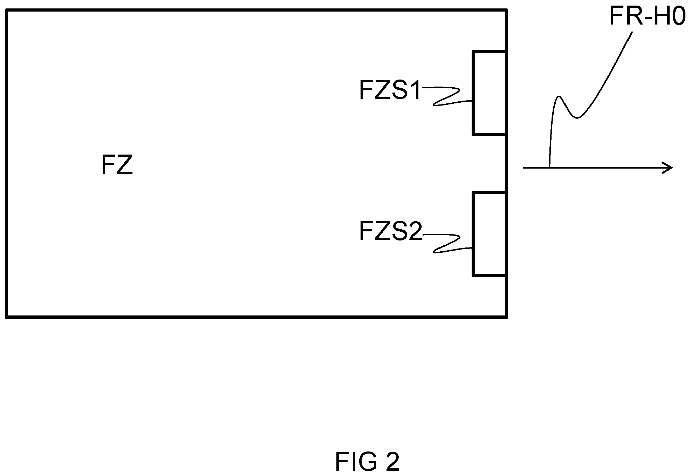

Figur 2 zeigt in Draufsicht ein Fahrzeug FZ und zwei Fahrzeugscheinwerfer FZS1, FZS2. Durch den Pfeil FR-H0 wird die horizontale Null Grad Richtung definiert. Diese stimmt bei Geradeausfahrt mit der Fahrtrichtung überein.

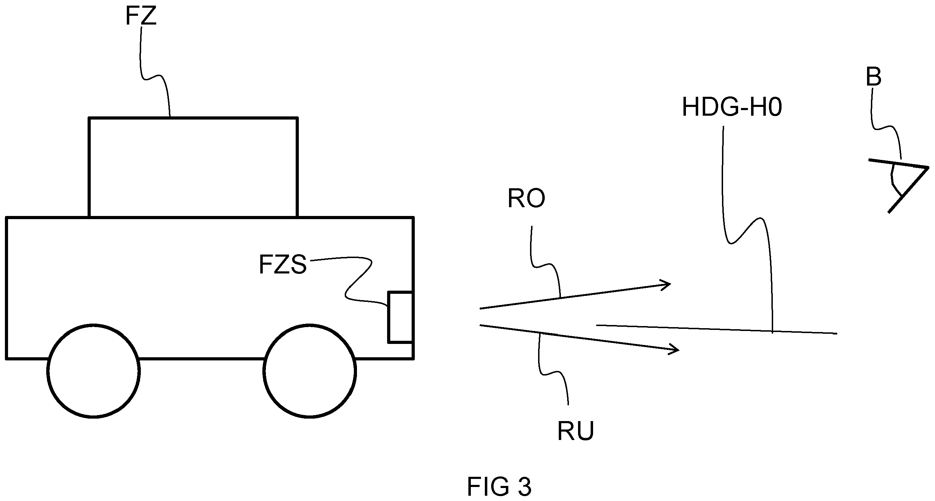

Figur 3 zeigt in Seitenansicht ebenfalls ein Fahrzeug FZ samt Fahrzeugscheinwerfer FZS. Außerdem ist die Helldunkelgrenze HDG-H0 in der horizontalen Null Grad Richtung dargestellt. Außerdem ist, bezogen auf durch den Fahrzeugscheinwerfer emittiertes Licht, jeweils exemplarisch eine Emissionsrichtung RO oberhalb der Hell-Dunkel-Grenze und eine Emissionsrichtung RU unterhalb der Hell-Dunkel-Grenze dargestellt.

Zudem ist ein Betrachter B dargestellt, dessen Augen regelmäßig (beispielsweise bei stehendem Betrachter oder bei in einem anderen Fahrzeug sitzenden Betrachter) oberhalb der der Hell-Dunkel-Grenze positioniert sind. Der Betrachter B wird deshalb regelmäßig durch Licht, das in eine Richtung unterhalb der Hell-Dunkel-Grenze emittiert wird, nicht geblendet. Das durch einen Betrachter B wahrgenommene Erscheinungsbild wird dagegen regelmäßig durch Licht, das in eine Richtung oberhalb der Hell-Dunkel-Grenze emittiert wird, geprägt.

Daher beruht die Erfindung auf dem Gedanken, einen Fahrzeugscheinwerfer FZS mit einem Abblendlichtmodul ALM und einem Erscheinungslichtmodul ELM auszustatten, die derart ausgeführt, angeordnet und ausgerichtet sind, dass in einem Abblendlichtmodus, insbesondere zur Realisierung einer Abblendlichtverteilung, relativ wenig, insbesondere weniger als bei einem Abblendlichtmodul nach dem Stand der Technik, der durch den Fahrzeugscheinwerfer oberhalb der Hell-Dunkel-Grenze emittierten Lichtstärke durch das Abblendlichtmodul erzeugt wird. Im Gegenzug wird in dem Abblendlichtmodus relativ viel, insbesondere mehr als bei einem Erscheinungslichtmodul nach dem Stand der Technik, der durch den Fahrzeugscheinwerfer oberhalb der Hell-Dunkel-Grenze emittierten Lichtstärke durch das Erscheinungslichtmodul erzeugt. Dadurch wird erreicht, dass das regelmäßig für einen Betrachter durch das Erscheinungslichtmodul erzeugte Erscheinungsbild durch das Licht des Abblendlichtmoduls nicht oder nicht stark überstrahlt, überlagert oder überblendet wird, und dass somit regelmäßig auch im Abblendlichtmodus das Erscheinungsbild des Fahrzeugscheinwerfers durch das Erscheinungslichtmodul geprägt wird.

Im Folgenden wird eine besonders vorteilhafte Ausführungsvariante eines Fahrzeugscheinwerfers näher beschrieben. Der Fahrzeugscheinwerfer FZS ist mit einem Abblendlichtmodul und einem Erscheinungslichtmodul, die derart ausgeführt, angeordnet und ausgerichtet sind, dass in einem Abblendlichtmodus, insbesondere zur Realisierung einer Abblendlichtverteilung, weniger als 15% der durch den Fahrzeugscheinwerfer hinsichtlich der vertikalen Ausrichtung oberhalb der Hell-Dunkel-Grenze und hinsichtlich der horizontalen Ausrichtung in Fahrtrichtung emittierten Lichtstärke durch das Abblendlichtmodul erzeugt werden.

Außerdem werden in dem Abblendlichtmodus mehr als 80% der durch den Fahrzeugscheinwerfer hinsichtlich der vertikalen Ausrichtung oberhalb der Hell-Dunkel-Grenze und hinsichtlich der horizontalen Ausrichtung in Fahrtrichtung emittierten Lichtstärke durch das Erscheinungslichtmodul erzeugt.

Alternativ oder ergänzend werden in dem Abblendlichtmodus weniger als 5% der durch den Fahrzeugscheinwerfer hinsichtlich der vertikalen Ausrichtung unterhalb der Hell-Dunkel-Grenze und hinsichtlich der horizontalen Ausrichtung in Fahrtrichtung emittierten Lichtstärke durch das Erscheinungslichtmodul erzeugt.

Alternativ oder ergänzend werden in dem Abblendlichtmodus mehr als 90% der durch den Fahrzeugscheinwerfer hinsichtlich der vertikalen Ausrichtung unterhalb der Hell-Dunkel-Grenze und hinsichtlich der horizontalen Ausrichtung in Fahrtrichtung emittierten Lichtstärke durch das Abblendlichtmodul erzeugt.

Alternativ oder ergänzend werden in einem Tagfahrlichtmodus, insbesondere zur Erzeugung einer Tagfahrlichtverteilung mehr als 99% der durch den Fahrzeugscheinwerfer hinsichtlich der horizontalen Ausrichtung in Fahrtrichtung emittierten Lichtstärke durch das Erscheinungslichtmodul erzeugt.

Alternativ oder ergänzend leistet in einem Tagfahrlichtmodus, insbesondere zur Erzeugung einer Tagfahrlichtverteilung, das Abblendlichtmodul einen untergeordneten Beitrag oder keinen Beitrag. Vorzugsweise ist das Abblendlichtmodul im Tagfahrlichtmodus abgeschaltet.

Das Erscheinungslichtmodul ist im Abblendlichtlichtmodus gegenüber dem Tagfahrlichtmodus erfindungsgemäß nur soweit gedimmt, dass die Maxima in den gesetzlichen Vorgaben über die Gesamlichtverteilung nicht überschritten werden.

Alternativ oder ergänzend werden im Abblendlichtmodus weniger als 15% des durch das Abblendlichtmodul erzeugten Lichtstromes oberhalb der Hell-Dunkel-Grenze abgestrahlt.

Alternativ oder ergänzend werden im Abblendlichtmodus mehr als 55% des durch das Erscheinungslichtmodul erzeugten Lichtstromes oberhalb der Hell-Dunkel-Grenze abgestrahlt.

Die oben genannten Lichtstärken werden entweder durch an sich bekannte Verfahren zur Ausführung, Anordnung und Ausrichtung von Lichtmodulen realisiert, wobei ergänzend vorgesehen sein kann, dass bei Ausführung das Abblendlichtmoduls als Projektionssystem eine Abbildungslinse des Projektionssystems eine Antireflexbeschichtung aufweist und/oder eine Blende des Projektionssystems lichtabsorbierend ausgeführt ist. Alternativ oder ergänzend dazu kann vorgesehen sein, dass bei Ausführung des Abblendlichtmoduls als Projektionssystem die Lichtführung im hinteren Linsenbereich streulichtarm ausgeführt ist.

Bei Ausführung des Abblendlichtmoduls als Reflektorsystem kann vorgesehen sein, dass die Oberfläche des Reflektors des Reflektorsystems mit hoher Oberflächengüte besonders streulichtarm ausgeführt ist. Außerdem können dabei streulichtverhindernde Blendenführungen und streulichtabsorbierende Lichtquellenumgebungen vorgesehen sein.

## Patentansprüche

1. Fahrzeugscheinwerfer
mit mindestens einem Abblendlichtmodul und mindestens einem Erscheinungslichtmodul, die derart ausgeführt, angeordnet und ausgerichtet sind,
- dass in einem Abblendlichtmodus, insbesondere zur Realisierung einer Abblendlichtverteilung, weniger als 30%, insbesondere weniger als 20% oder weniger als 10% oder weniger als 5% oder weniger als 3%, der durch den Fahrzeugscheinwerfer hinsichtlich der vertikalen Ausrichtung oberhalb der Hell-Dunkel-Grenze und hinsichtlich der horizontalen Ausrichtung in Fahrtrichtung emittierten Lichtstärke durch das Abblendlichtmodul erzeugt werden,
- dass in dem Abblendlichtmodus mehr als 70%, insbesondere mehr als 80% oder mehr als 90% oder mehr als 95% oder mehr als 97%, der durch den Fahrzeugscheinwerfer hinsichtlich der vertikalen Ausrichtung oberhalb der Hell-Dunkel-Grenze und hinsichtlich der horizontalen Ausrichtung in Fahrtrichtung emittierten Lichtstärke durch das Erscheinungslichtmodul erzeugt werden,
- dass in einem Tagfahrlichtmodus, insbesondere zur Erzeugung einer Tagfahrlichtverteilung, mehr als 90%, insbesondere mehr als 99%, der durch den Fahrzeugscheinwerfer hinsichtlich der horizontalen Ausrichtung in Fahrtrichtung emittierten Lichtstärke durch das Erscheinungslichtmodul erzeugt werden, und
- bei dem das Erscheinungslichtmodul im Abblendlichtlichtmodus gegenüber dem Tagfahrlichtmodus gedimmt ist, aber nur soweit, dass die Maxima in den gesetzlichen Vorgaben über die Gesamtlichtverteilung nicht überschritten werden.

2. Fahrzeugscheinwerfer nach Anspruch 1,
- bei dem in einem Abblendlichtmodus, insbesondere zur Realisierung einer Abblendlichtverteilung, weniger als 10%, insbesondere weniger als 5% oder weniger als 3%, der durch den Fahrzeugscheinwerfer hinsichtlich der vertikalen Ausrichtung unterhalb der Hell-Dunkel-Grenze und hinsichtlich der horizontalen Ausrichtung in Fahrtrichtung emittierten Lichtstärke durch das Erscheinungslichtmodul erzeugt werden.

3. Fahrzeugscheinwerfer nach einem der vorhergehenden Ansprüche,
- bei dem in einem Abblendlichtmodus, insbesondere zur Realisierung einer Abblendlichtverteilung, mehr als 90%, insbesondere mehr als 95% oder mehr als 98%, der durch den Fahrzeugscheinwerfer hinsichtlich der vertikalen Ausrichtung unterhalb der Hell-Dunkel-Grenze und hinsichtlich der horizontalen Ausrichtung in Fahrtrichtung emittierten Lichtstärke durch das Abblendlichtmodul erzeugt werden.

4. Fahrzeugscheinwerfer nach einem der vorhergehenden Ansprüche,
- bei dem in einem Tagfahrlichtmodus, insbesondere zur Erzeugung einer Tagfahrlichtverteilung, das Abblendlichtmodul einen untergeordneten Beitrag oder keinen Beitrag leistet, insbesondere im Tagfahrlichtmodus abgeschaltet ist.

5. Fahrzeugscheinwerfer nach einem der vorhergehenden Ansprüche,
bei dem das Erscheinungslichtmodul ein Lichtleitermodul umfasst, durch das im Abblendlichtmodus und im Tagfahrlichtmodus eine markenprägende Erscheinung des Fahrzeugscheinwerfers realisiert wird.

6. Fahrzeugscheinwerfer nach einem der vorhergehenden Ansprüche,
bei dem das Abblendlichtmodul und das Erscheinungslichtmodul durch verschiedene Lichtquellen realisiert werden.

7. Fahrzeugscheinwerfer nach einem der vorhergehenden Ansprüche,
- bei dem im Abblendlichtmodus weniger als 20%, insbesondere weniger als 15%, weniger als 10% oder weniger als 5% oder weniger als 3%, des durch das Abblendlichtmodul erzeugten Lichtstromes oberhalb der Hell-Dunkel-Grenze abgestrahlt werden.

8. Fahrzeugscheinwerfer nach einem der vorhergehenden Ansprüche,
- bei dem im Abblendlichtmodus mehr als 40%, insbesondere mehr als 55% mehr als 75% mehr als 90% oder mehr als 95%, des durch das Erscheinungslichtmodul erzeugten Lichtstromes oberhalb der Hell-Dunkel-Grenze abgestrahlt werden.

9. Fahrzeugscheinwerfer nach einem der vorhergehenden Ansprüche,
bei dem das Abblendlichtmodul als Projektionssystem ausgeführt ist, wobei eine Abbildungslinse des Projektionssystems eine Antireflexbeschichtung aufweist.

10. Fahrzeugscheinwerfer nach einem der vorhergehenden Ansprüche,
bei dem das Abblendlichtmodul als Projektionssystem ausgeführt ist, wobei die Blende des Projektionssystems lichtabsorbierend ausgeführt ist.

11. Fahrzeugscheinwerfer nach einem der vorhergehenden Ansprüche,
bei dem das Abblendlichtmodul als Projektionssystem ausgeführt ist, wobei die Lichtführung im hinteren Linsenbereich streulichtarm ausgeführt ist.

12. Fahrzeugscheinwerfer nach einem der vorhergehenden Ansprüche,
bei dem das Abblendlichtmodul als Reflektorsystem ausgeführt ist, wobei die Oberfläche und die Berandungen des Reflektors des Reflektorsystems streulichtarm ausgeführt sind.

13. Fahrzeugscheinwerfer nach einem der vorhergehenden Ansprüche,
bei dem im Abblendlichtmodus der durch das Abblendlichtmodul erzeugte Lichtstrom mindestens dem zweifachen, insbesondere mindestens dem dreifachen oder mindestens dem vierfachen, des durch das Erscheinungslichtmodul erzeugten Lichtstromes entspricht.

## Claims

1. Vehicle headlight
having at least one dipped-beam light module and at least one appearance light module, which are designed, arranged and oriented such
- that less than 30%, in particular less than 20% or less than 10% or less than 5% or less than 3%, of the luminous intensity emitted by the vehicle headlight with respect to the vertical alignment above the cut-off and with respect to the horizontal alignment in the direction of travel is generated by the dipped-beam light module in a dipped-beam light mode, in particular for realizing a dipped-beam light distribution,
- that more than 70%, in particular more than 80% or more than 90% or more than 95% or more than 97%, of the luminous intensity emitted by the vehicle headlight with respect to the vertical alignment above the cut-off and with respect to the horizontal alignment in the direction of travel is generated by the appearance light module in the dipped-beam light mode,
- that more than 90%, in particular more than 99%, of the luminous intensity emitted by the vehicle headlight with respect to the horizontal alignment in the direction of travel is generated by the appearance light module in a daytime running light mode, in particular for generating a daytime running light distribution, and
- wherein the appearance light module in the dipped-beam light mode is dimmed compared to the daytime running light mode, but only to such an extent that the maxima in the legal stipulations relating to the overall light distribution are not exceeded.

2. Vehicle headlight according to Claim 1,
- wherein less than 10%, in particular less than 5% or less than 3%, of the luminous intensity emitted by the vehicle headlight with respect to the vertical alignment below the cut-off and with respect to the horizontal alignment in the direction of travel is generated by the appearance light module in a dipped-beam light mode, in particular for realizing a dipped-beam light distribution.

3. Vehicle headlight according to either of the preceding claims,
- wherein more than 90%, in particular more than 95% or more than 98%, of the luminous intensity emitted by the vehicle headlight with respect to the vertical alignment below the cut-off and with respect to the horizontal alignment in the direction of travel is generated by the dipped-beam light module in a dipped-beam light mode, in particular for realizing a dipped-beam light distribution.

4. Vehicle headlight according to either of the preceding claims,
- wherein the dipped-beam light module makes a minor contribution or no contribution in a daytime running light mode, in particular for generating a daytime running light distribution, in particular is switched off in the daytime running light mode.

5. Vehicle headlight according to either of the preceding claims,
- wherein the appearance light module comprises a light-guide module through which a brand-specific appearance of the vehicle headlight is realized in the dipped-beam light mode and in the daytime running light mode.

6. Vehicle headlight according to either of the preceding claims,
- wherein the dipped-beam light module and the appearance light module are implemented by different light sources.

7. Vehicle headlight according to either of the preceding claims,
- wherein less than 20%, in particular less than 15%, less than 10% or less than 5% or less than 3%, of the luminous flux generated by the dipped-beam light module is emitted above the cut-off in the dipped-beam light mode.

8. Vehicle headlight according to either of the preceding claims,
- wherein more than 40%, in particular more than 55%, more than 75%, more than 90% or more than 95%, of the luminous flux generated by the appearance light module is emitted above the cut-off in the dipped-beam light mode.

9. Vehicle headlight according to either of the preceding claims,
- wherein the dipped-beam light module is embodied in the form of a projection system, wherein an imaging lens of the projection system has an anti-reflective coating.

10. Vehicle headlight according to either of the preceding claims,
- wherein the dipped-beam light module is embodied in the form of a projection system, wherein the stop of the projection system is embodied so as to absorb light.

11. Vehicle headlight according to either of the preceding claims,
- wherein the dipped-beam light module is embodied in the form of a projection system, wherein the light guidance in the rear lens region is embodied to produce low levels of stray light.

12. Vehicle headlight according to either of the preceding claims,
- wherein the dipped-beam light module is embodied in the form of a reflector system, wherein the surface and the peripheries of the reflector of the reflector system are embodied to produce low levels of stray light.

13. Vehicle headlight according to either of the preceding claims,
- wherein the luminous flux generated by the dipped-beam light module in the dipped-beam light mode corresponds to at least two times, in particular at least three times or at least four times, the luminous flux generated by the appearance light module.

## Revendications

1. Phare de véhicule
comprenant au moins un module de feux de croisement et au moins un module de feux de vision, qui sont réalisés, disposés et orientés de telle manière,
- que, en mode feux de croisement, notamment pour réaliser une répartition des feux de croisement, moins de 30%, en particulier moins de 20% ou moins de 10% ou moins de 5% ou moins de 3% de l'intensité lumineuse émise par le phare de véhicule au-dessus de la limite clair-obscur en ce qui concerne l'orientation verticale et en dans le sens de la marche ce qui concerne l'orientation horizontale, sont générés par le module de feux de croisement,
- que, en mode feux de croisement, plus de 70%, en particulier plus de 80% ou plus de 90% ou plus de 95% ou plus de 97%, de l'intensité lumineuse émise par le phare du véhicule au-dessus de la limite clair-obscur en ce qui concerne l'orientation verticale et dans le sens de la marche en ce qui concerne l'orientation horizontale, sont générés par le module de feux de vision,
- que, en mode feux diurnes, notamment pour générer une répartition de feux diurnes, plus de 90%, en particulier plus de 99%, de l'intensité lumineuse émise par le phare du véhicule dans le sens de la marche en ce qui concerne l'orientation horizontale sont produits par le module de feux de vision, et
- de sorte que le module de feux de vision est atténué en mode feux de croisement par rapport au mode feux diurnes, mais seulement dans la mesure où les maxima dans les prescriptions légales concernant la répartition globale de la lumière ne sont pas dépassés.

2. Phare de véhicule selon la revendication 1,
- dans lequel, en mode feux de croisement, notamment pour la réalisation d'une répartition des feux de croisement, moins de 10%, en particulier moins de 5% ou moins de 3%, de l'intensité lumineuse émise par le phare du véhicule en dessous de la limite clair-obscur en ce qui concerne l'orientation verticale et dans le sens de la marche en ce qui concerne l'orientation horizontale, sont générés par le module de feux de vision.

3. Phare de véhicule selon l'une des revendications précédentes,
- dans lequel, en mode feux de croisement, notamment pour réaliser une répartition des feux de croisement, plus de 90%, en particulier plus de 95% ou plus de 98% de l'intensité lumineuse émise par le phare du véhicule en dessous de la limite clair-obscur en ce qui concerne l'orientation verticale et dans le sens de la marche en ce qui concerne l'orientation horizontale, sont générés par le module de feux de croisement.

4. Phare de véhicule selon l'une des revendications précédentes,
- dans lequel, en mode feux diurnes, notamment pour réaliser une répartition des feux diurnes, le module de feux de croisement n'apporte qu'une faible contribution ou aucune contribution, en particulier est désactivé dans le mode feux diurnes.

5. Phare de véhicule selon l'une des revendications précédentes,
dans lequel le module de feux de vision comprend un module de guide de lumière grâce auquel, en mode feux de croisement et en mode feux diurnes, une apparence caractéristique de la marque du phare de véhicule est réalisée.

6. Phare de véhicule selon l'une des revendications précédentes,
dans lequel le module de feux de croisement et le module de feux de vision sont réalisés par des sources lumineuses différentes.

7. Phare de véhicule selon l'une des revendications précédentes,
- dans lequel, en mode feux de croisement, moins de 20%, notamment moins de 15%, moins de 10% ou moins de 5% ou moins de 3%, du flux lumineux généré par le module de feux de croisement sont émis au-dessus de la limite clair-obscur.

8. Phare de véhicule selon l'une quelconque des revendications précédentes,
- dans lequel, en mode feux de croisement, plus de 40%, notamment plus de 55% plus de 75% plus de 90% ou plus de 95%, du flux lumineux généré par le module de feux de vision sont émis au-dessus de la limite clair-obscur.

9. Phare de véhicule selon l'une des revendications précédentes,
dans lequel le module de feux de croisement est réalisé sous la forme d'un système de projection, une lentille de reproduction du système de projection comportant un revêtement antireflet.

10. Phare de véhicule selon l'une des revendications précédentes,
dans lequel le module de feux de croisement est réalisé sous forme de système de projection, le diaphragme du système de projection étant conçu de manière à absorber la lumière.

11. Phare de véhicule selon l'une des revendications précédentes,
dans lequel le module de feux de croisement est réalisé sous la forme d'un système de projection, le guide de lumière dans la zone de lentille arrière étant conçu pour être à faible lumière diffusée.

12. Phare de véhicule selon l'une des revendications précédentes,
dans lequel le module de feux de croisement est réalisé sous la forme d'un système réflecteur, la surface et les bords du réflecteur du système réflecteur étant conçus pour être à faible lumière diffusée.

13. Phare de véhicule selon l'une des revendications précédentes,
dans lequel, en mode feux de croisement, le flux lumineux généré par le module de feux de croisement correspond au moins deux fois, en particulier au moins trois fois ou au moins quatre fois, le flux lumineux généré par le module de feux de vision.
